# EUROPEAN PATENT APPLICATION

(11) **EP 4 800 717 A1**
(43) Date of publication of application: **02.09.2026**
(21) Application number: 25160358.5
(22) Date of filing: 26.02.2025
(51) Int. Cl.: G21G 1/00, C07B 59/00, A61N 5/10, G21F 5/015

(54) **AUTOMATED SYSTEM AND PROCESS FOR COLD KIT RADIOLABELING AND SYRINGE DISPENSING ASSISTANCE COMPATIBLE WITH GENERATORS OR SOLUTION SUPPLY**

(71) Applicant: Trasis S.A., 4430 Ans (BE)
(72) Inventor: MORELLE, Jean-Luc, 4000 LIEGE (BE); DUBART, Amaury, 1370 JODOIGNE (BE); VANASSCHEN, Christian, 4458 FEXHE-SLINS (BE); VERGOTE, Thomas, 1350 MARILLES (BE); MASSET, Julien, 4000 LIEGE (BE)
(74) Representative: AWA Benelux

(57) **Abstract**

A fully automated system for radiolabeling a cold kit and dispensing a dose to a patient comprising :
- an elution set capable to connect a generator (1) or an activity vial to a synthesizer (5), and possibly to an external syringe driver (3) ;
- a radioisotope generator (1) or a vial containing starting activity for the production of a radioisotope, so that the elution of the radioisotope out of the generator is performed by using an elution solution, which is internal or external depending on the generator, and automated means for managing the radioisotope generator operation ;
- a cold kit vial (2) containing reagents needed to perform radiolabelling with said radioisotope, and fluidly connected to the radioisotope generator (1) so that through automated elution the eluted radioisotope is capable to be mixed with the cold kit in said vial (2) to provide a radiolabelled product ;
- a synthesizer (5) with a syringe dispensing assistance provided with means to successively and automatically produce an aspiration of the radiolabeled product from said cold kit vial (2) into the synthesizer (5), the addition of a buffer to the radiolabeled product, heating the radiolabeled product, to provide an accurate patient dose and a final dispensing of the patient dose ;
- a heating block (4) equipped with a radioactivity probe for heating the radiolabeled product, and measuring the final activity thereof.

## Description

### Field of the Invention

The present invention relates to the fields of medical technology and pharmaceutical technology, especially of nuclear medicine, both for diagnostic and therapeutic applications.

### Background and Prior Art

In the fields of medical technology, pharmaceutical technology, and nuclear medicine, the process of radiolabeling of cold kits and subsequent dispensing of patient doses is a crucial aspect.

Radiolabeling is the process of attaching a radioactive substance to a molecule, typically for use in diagnostic imaging or therapeutic applications.

The radioactive substance is obtained via a radiocompound generator, from a cyclotron or from a reactor.

For example, a Germanium-68/Gallium-68 ([68Ge]/[68Ga]) generator is a device used to produce Gallium-68.

A [68Ge]/[68Ga] generator works on the principle of radioactive decay. It uses a parent source, namely [68Ge], which decays to produce [68Ga], according to the following reaction : $\left[68Ge\right] \to \left[68Ga\right] + β + {ν}_{e}$

A [68Ge]/[68Ga] generator consists of a parent source ([68Ge]) attached to a solid matrix (usually a metal oxide or resin), an ion exchange column which contains the matrix which retains the [68Ge] while allowing elution of the [68Ga], an elution system using a solution to extract the [68Ga] from the column and finally a shielding for protecting personnel from radiation.

The [68Ge], which has a half-life of approximately 271 days, permanently fixed to the solid matrix, remains in the generator throughout its lifetime. Over time, the [68Ge] disintegrates into [68Ga] on the matrix. An elution solution (usually diluted HCl) is injected into the generator. This solution extracts as an aqueous solution mainly the [68Ga] formed, while the [68Ge] remains attached to the column. The solution containing [68Ga] is then used to label specific molecules in radiopharmaceutical kits, thus forming an injectable product for positron emission tomography (PET) scans.

A [68Ge]/[68Ga] generator can be used for several months (up to a year), depending on the remaining activity inside the generator. [68Ga] can be harvested several times a day, preferably after minimum 4 hour intervals, depending on clinical demand.

Use of a generator allows on-site production, without the need for a cyclotron. It is suitable for rapid and accurate diagnostics, compact and easy to use in equipped laboratories.

A cold kit is any preparation to be reconstituted or combined with radionuclides in a final radiopharmaceutical, usually for its administration.

Cold kit-based radiolabeling is considered a procedure consisting of preparation of a sterile radiopharmaceutical through the addition of a sterile eluate to a sterilized close vial containing a set of sterile, lyophilized ingredients via a system closed to the atmosphere. The final product is thus a sterile and pyrogen-free solution suitable for intravenous injection.

Cold kits are used for the production of [68Ga]-radiopharmaceuticals that are commonly employed for PET imaging of various oncological conditions. Such kits contain a chemical precursor and a buffer, which have to be mixed with [68Ga]GaCl₃ eluate to perform radiolabeling. From the time being, non-exhaustive examples of cold kits available on the market are SomaKit^{®}, NetSpot^{®}, Locametz^{®}, Illuccix^{®} or IsoProTrace^{®}. Their practicality lies in their stability, ease of use and compatibility with commercial GMP [68Ge/68Ga] generators (such as GalliAd^{®} from IRE-ELiT and GalliaPharm^{®} from Eckert&Ziegler (E&Z)). The use of cold kits is defined by the manufacturer and described in the Summary of Product Characteristics (SmPC) for each kit.

A comprehensive review of cold kit labeling with 68Ga radiopharmaceuticals can be found in Nicolas Lepareur, Cold Kit labeling: The Future of 68Ga Radiopharmaceuticals ?, Front. Med. , Feb. 2022, Vol. 9, Art. 812050, pp. 1-22.

According to current state of the art, the applicant is used to provide a ready-to-use and SmPC compliant solution for cold kit radiolabeling and subsequent syringe dispensing assistance for patient dose preparation.

Automated syringe dispensing assistance is an automated process that allows filling dispensing syringes while improving radioprotection and reducing dose preparation time.

Existing solutions in current technology involve manual or sometimes semi-automated processes for the radiolabeling of cold kits and dispensing of patient doses. These processes typically involve the use of radioisotopes generated from a radioisotope generator or supplied as a solution in a vial. The radioisotope is then eluted from the generator or aspirated from the vial and added to the cold kit, sometimes followed by the addition of a buffer. The mixture may then be heated to facilitate the radiolabeling process. Once the radiolabeling is complete, the resulting radiopharmaceutical is dispensed to the patient.

According to prior art, the sequence of operations for cold kit radiolabelling and dose preparation is the following:
- provision and placement of consumables, water for injection (WFI) and optionally buffer (manual) ;
- reconstitution of the cold kit (manual) ;
- manual activity measurement (at the end of radiobabeling) ;
- QC sampling operation (manual) ;
- preparation of patient dose (manual) : iterative process corresponding to the obtention of the activity target with a tolerance of about 10-15%.

According to prior art, some semi-automated methods have been developed. For example, KitLab (https://medical.ezag.com/en/products/kitlab/ ; Eckert & Ziegler Eurotope GmbH) is a standalone device connected to a standard socket outlet provided with accessories and with smart selection of the application via RFID card and insertion of a corresponding cassette. For the transfer of liquids it uses - in a way that is not really convenient - a peristaltic pump with four independently programmable channels (see also US2019/323496A1). This allows to avoid formulating kit by hand. However there is no real quantitative protection of the operator against radiation (the protection is according to ALARA guidance - *As low* as *reasonably achievable*)*,* except when working in hot cell. Automated/controlled elution of generator is claimed but not shown in documentation. Further sterile QC sampling and sterile filtration are optional.

The drawbacks thereof are primarily a high cost, the complexity of installation, as the installation of the KitLab may require specific adjustments to adapt to existing infrastructures, particularly with regard to hot cells and ventilation systems and also a dependance on automation, as a failure of the automated system may lead to an interruption in operations, requiring specialist technical intervention for troubleshooting and maintenance.

For example, KitLab is not compatible with all cold kits as it is not possible for example to add other solutions like buffers and above all cannot allow to obtain an automatic QC dose nor to do dose dispensing (Illuccix^{®}, IsoProTrace^{®} or other cold kits are not described in the documentation). Further radioprotection if any is not optimized as a lot of manual intervention is required.

In Elke A. van Brandwijk et al, "Automated radiolabelling of [68Ga]Ga-PSMA-11 (gallium (68Ga)-gozetotide) using the Locametz® kit and two generators", EJNMMI Radiopharmacy and Chemistry (2024) 9:31, pages 1-12, automated radiolabelling of [68Ga]Ga-PSMA-11 was reported using the Locametz^{®} kit with higher gallium-68 activity than specified in the SmPC results in a product that is in compliance with the Ph. Eur. monograph and has a shelf-life of 6h at room temperature. The cold kit is used with a synthesizer from Scintomics GmbH (Munich, Germany). No management of the generator is foreseen, nor any further dispensation.

In summary, despite the advancements in medical technology, the current technology for radiolabeling of cold kits and dispensing of patient doses still faces a number of challenges. In all these systems of prior art, no really full automation from radioisotope production to dispensation to patient is reported.

### Aims of the Invention

The present invention aims to solve different technical problems.

A first problem to solve is a lack of full automation. The current technology involves manual or semi-automated processes for radiolabeling of cold kits and dispensing of patient doses, which is labor-intensive, time-consuming and operator-exposant. This invention intends to provide automation through the entire process, from the provision of the radiopharmaceutical to the final dispensing of the syringe patient dose, thereby significantly reducing labor-intensive tasks and further costs and increasing efficiency. Further automation of the radiolabeling process would lead to more consistent and accurate results, by limiting potential human error and thereby improving the effectiveness of the procedures.

A second problem is inefficient management of the radioisotope generator. The existing technology does not allow for effective management of the radioisotope generator, including tasks such as cleaning, elution, and measurement of initial activity and decay of the radioisotope. This invention is intended to address this issue by incorporating a system that can manage the generator effectively, ensuring accurate dosing and minimizing patient exposure (or equivalently improving patient safety).

A third problem is disjointed process. The current technology does not allow for global operation, from the provision or "production" of the radioisotope to the final dispensing of the patient dose. This results in a disjointed process, which can lead to inefficiencies and increased costs. This invention aims to solve this problem by providing global operation, thereby streamlining the process and reducing costs.

Finally a fourth problem lies in the inability to automatically prepare a sample for QC testing: the current technology does not allow for the automatic preparation of a sample for QC testing, which can result in the release of substandard products, compromising patient safety. A goal of the invention is to address this issue by automatically preparing a sample for QC testing, ensuring the quality of the final product and enhancing patient safety. Moreover, automated QC sample preparation would allow substantial improvement of the radioprotection of the operator.

### Summary of the Invention

A first aspect of the present invention relates to a fully automated system for radiolabeling a cold kit and dispensing a dose to a patient, according to claim 1.

According to preferred embodiments, the fully automated system for radiolabeling a cold kit and dispensing a dose to a patient further comprises at least one additional feature depicted in dependent claims 2 to 9 or a suitable combination of several such additional features.

A second aspect of the present invention relates to a streamlined automated process for radiolabeling a cold kit with a radioisotope and preparing the dispensing of a dose to a patient, using the automated system disclosed above, comprising the automated steps according to claim 10.

A third aspect of the present invention relates to the streamlined automated process for radiolabeling a cold kit with a radioisotope and dispensing of a dose to a patient, as described above, further comprising the steps according to claim 11, performed at least partially manually, as a preparation preamble.

### Brief Description of the Drawings

Figure 1 is representing the layout of the [68Ga] cold kit radiolabeling part in the automated device according to an embodiment of the invention, in combination with a [68Ga] Eckert & Ziegler generator (GalliaPharm^{®}).
Figure 2 is representing the layout of the [68Ga] cold kit syringe dispensing assistance part in the automated device according to the above embodiment of the invention.

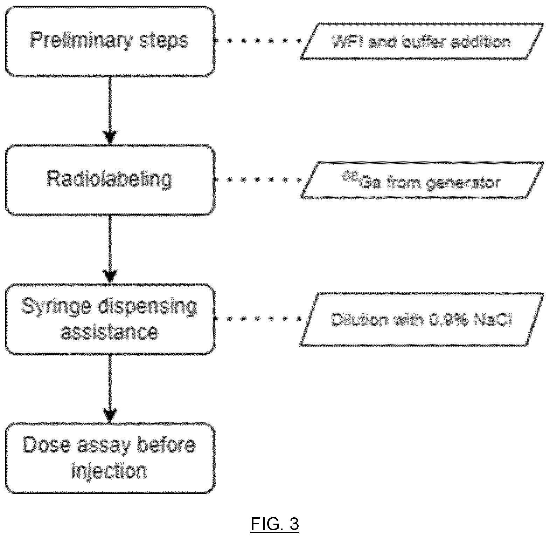

Figure 3 provide a rough summary for sequence of operations according to prior art or to the invention (fully automated).
Figure 4 shows a specific embodiment for a single use cassette fully sterilized by gamma radiation and ready-to-use in the automated device according to an embodiment of the invention.
Figure 5 shows the layout of the [68Ga] cold kit syringe dispensing assistance with syringe shielding holder and shielding for 5mL BD syringe in an embodiment of the automated device according to the invention.

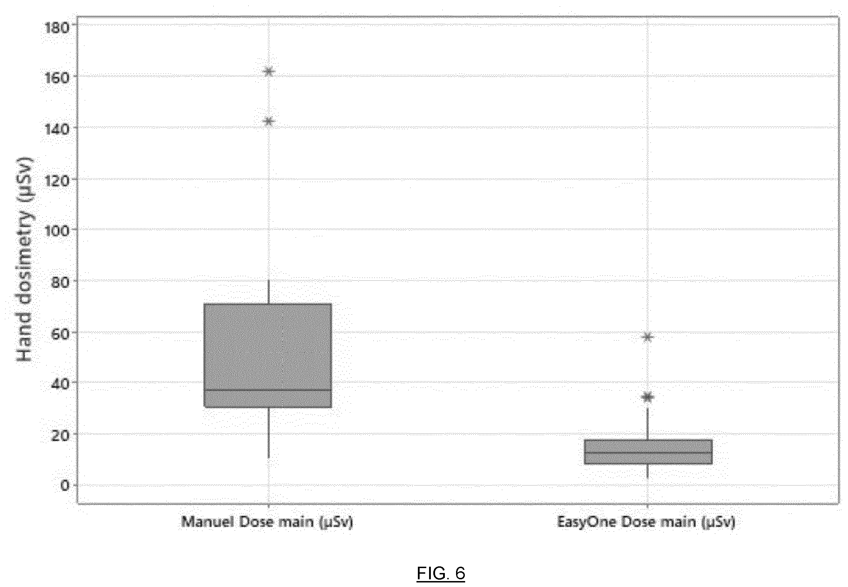

Figure 6 shows the hand dosimetry in the dose preparation step, in manual method and with EasyOne automated method respectively.

### Detailed Description of the Invention

In order to achieve the above objectives, the present disclosure mainly presents the following characteristics.

### 1. Automation of radiolabeling and syringe dispensing assistance

The invention introduces a fully automated system for the radiolabeling of cold kits and dispensing of patient doses. This automation includes an automated elution of a radioisotope generator (such as a [68Ge]/[68Ga]-generator), or an automated aspiration of the radioisotope to a vial with an automated addition of a buffering or scavenging media (if required), a heating (if necessary), and a final dispensing of the patient dose. This automation reduces manual labor, increases efficiency, reduces the cost of production, minimizes the risk of human error and improves radioprotection of the operator.

### 2. Effective management of radioisotope generator

The invention incorporates a system that can effectively manage the radioisotope generator. This management includes the actions of cleaning, elution, measurement of initial activity and decay calculation of the parent radioisotope. This management has the advantage to ensure accurate dosing and minimizes potential harm to the patient.

### 3. Global operation from activity receival (generator elution or transfer from a vial) to patient dose dispensing

The invention provides a global operation, from the withdrawal or elution of the radioisotope to the final dispensing of the patient doses. This streamlines the process, reduces inefficiencies, minimize potential human errors and improves radioprotection of the operator.

### 4. Automatic preparation of sample for QC testing

The invention automatically prepares a fraction for QC testing. As required in the SmPC, QC testing is required to ensure the quality of the radiopharmaceutical and therefore enhances patient safety.

### 5. Compatibility with different radioisotopes

The invention is compatible with radioisotopes coming from a generator or supplied as a solution in a vial. This flexibility allows the invention to be used in a variety of settings and with different types of radioisotopes.

### 6. Heating automatization

In cases where heating is required, the invention also automatizes heating, which may be a crucial step in the radiolabeling process. This ensures the efficient and effective radiolabeling of the cold kit.

### 7. User-friendly interface

The invention includes a user-friendly interface that allows for easy operation and monitoring of the system. This makes the invention easy to use and reduces the likelihood of errors.

### 8. Safety features

The invention includes safety features such as syringe shielding and automatic shutdown in case of errors. This ensures the safety of the user and the patient.

In conclusion, this invention significantly improves upon the existing technology in terms of efficiency, accuracy, safety, radioprotection of the operator and cost-effectiveness. It represents a significant advancement in the field of medical technology, pharmaceutical technology, and nuclear medicine.

### Description of a Preferred Embodiment of the Invention

Particular embodiments of the present invention relate to a fully automated system for the radiolabeling of cold kits and dispensing of patient doses. The system is designed to automate the entire process, from the elution of the radioisotope to the final syringe dispensing of the patient dose.

### Materials

In some embodiments of the invention, related to the [68Ga/68Ge] generator in use, the design of the cold kit radiolabeling process is as depicted in the following figures.

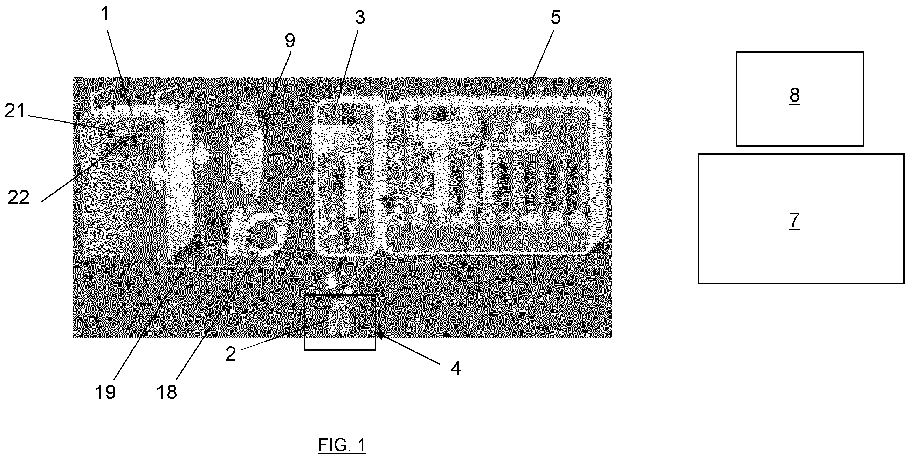

Figure 1 shows the layout of the [68Ga] cold kit radiolabeling device using the Eckert & Ziegler generator 1. The elution set 19 connects the external syringe actuator or driver 3, the elution loop 18 and the [68Ga] generator 1. A source of HCl 9 has to be connected to the elution loop 18. The elution is automatically performed by use of the external syringe actuator 3.

The elution set 19 is a sterile consumables pack, ideally compatible with all existing generators, that allows the automatic elution of the generator with an appropriate HCl volume.

Using a syringe dispensing assistance device, radiolabeling is performed and QC sample is delivered. Then the final radiopharmaceutical can be divided into patient doses

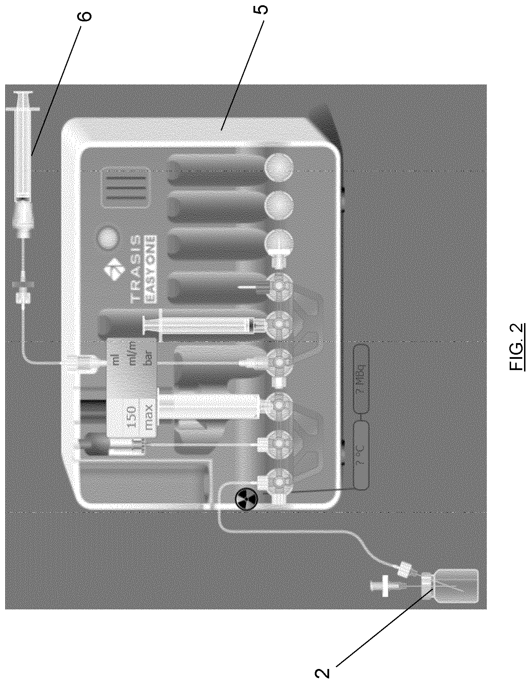

Figure 2 shows a particular embodiment for the layout of a [68Ga] cold kit synthesizer device 5 provided with means for syringe dispensing assistance.

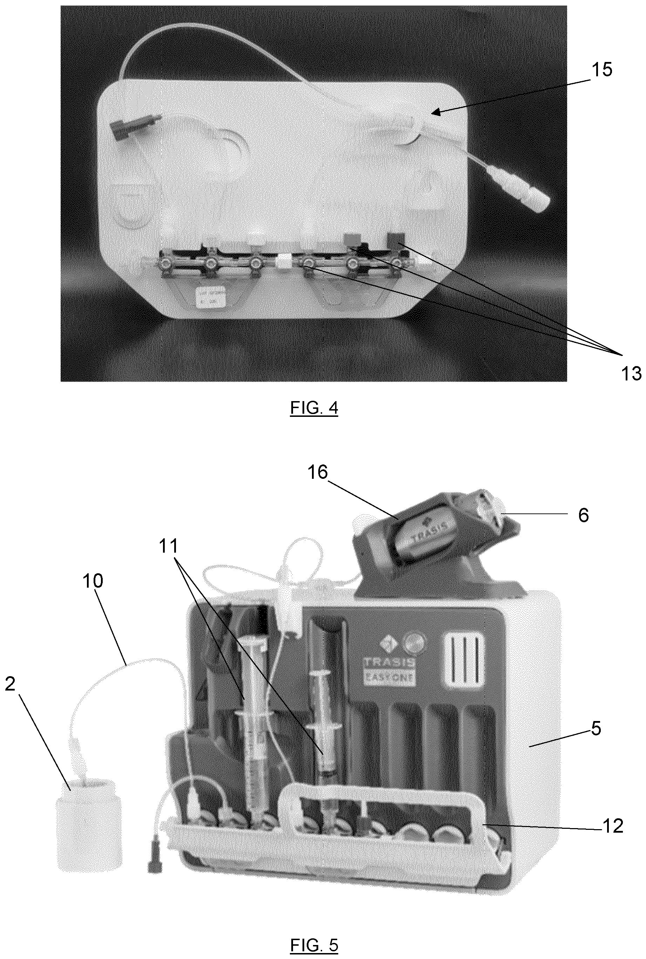

Figure 4 shows an embodiment for a single use cassette 15 fully sterilized by gamma radiation and ready-to-use. For example the cassette may comprise accessories 13 such as a manifold composed of 3-ways valves, an air filter, a color-coded stopper, an inlet line, a final delivery line, a short needle, a 10mL luer-lock HSW syringe, a spike with color-coded ring and a silicon line.

Figure 5 shows an embodiment for the layout of the [68Ga] cold kit syringe dispensing assistance similar to the one of figure 2 but with syringe shielding holder 16 and shielding for 5mL BD syringe 6.

### Methods

The automated process can be split into two parts: radiolabeling, which includes automated generator elution, and syringe dispensing assistance.

The operator simply follows the instructions given by the user interface 8 when launching the production. In summary, the following steps are executed on the system (see figures) :
Step 1: Preparation of the sterile consumables. Single use consumables ensure the quality of the final product and minimize human errors.
Step 2: The radioisotope generator 1 is managed by the control system. This includes cleaning, elution, and measurement of initial activity and decay of the radioisotope. This ensures accurate dosing and minimizes potential harm to the patient.
Step 3: The elution of the generator toward the sterilely lyophilized cold kit contained in a closed vial 2 is automated. This is achieved using an external syringe driver 3 equipped with a syringe. The vial 2 is shown on FIG. 1 as lying outside of the synthesizer or syringe dispensing assistance device 5. The vial 2 is generally placed into an appropriate lead shielding (not shown) to reduce the operator exposition to radioactivity. According to an alternate embodiment, cold kit vial 2 can be incorporated inside the synthesizer 5. The radioisotope is obtained from elution of a [68Ga]-generator 1. The system is advantageously designed to be compatible with all GMP generators available on the market.
Step 4: The buffer is added to the cold kit vial 2 manually or automatically. The amount of buffer added is given by the SmPC of the cold kits. Depending of the cold kit and the generator used, the addition of the buffer is done before elution, after elution or no buffer is added.
Step 5: Depending on the cold kit, the vial is heated or not in an oven. Temperature and reaction time are indicated in the SmPC. Heating is achieved using a heating block 4. Heating block 4 is preferably located inside the synthesizer 5.
Step 6: A sample for QC testing is automatically prepared (not shown). This sample, which usually is a small volume, for example 100-200 µL, is subjected to various tests to ensure the quality of the final product using the syringe dispensing assistance means. Quality requirements are given by the SmPC of each cold kit.
Step 7: In order to dispense the patient dose automatically, the operator enters the requested dose, calculated on the basis of cold kit manufacturer recommendations, in the software interface 8. A radioactivity probe (not shown) located near the heating block 4 allows to measure the total activity in the vial. Alternatively, measuring the total activity in the vial can be performed manually and entered in the software interface 8. Starting from this measurement and from the desired dose, a suitable quantity of liquid is sucked. The dose is dispensed by using the syringe dispensing assistance means and transferred into a 5 mL syringe 6 surrounded by a syringe shielding.
Step 8: The system comprising a control micro-computer 7 or equivalent, such as PC, laptop, smartphone, tablet, workstation or micro-controller, includes a user-friendly interface 8 that allows an easy operation and monitoring of the system. The system also includes safety features such as suitable radiation shielding and automatic shutdown in case of errors (not shown). The system is thus designed to reduce labor intensity and increase efficiency. It also ensures accurate dosing, minimizes potential harm to the patient and improves radioprotection of the operator. Furthermore, it streamlines the process and reduces costs.

According to some embodiments, the automation of cold kit radiolabeling may advantageously be performed with one of the Trasis^{®} synthesizer, such as AllinOne, AllinOne S, MiniAllinOne, EasyOne preferably, and more preferably with EasyOne, in agreement with SmPC, which are compatible with all cold kits and all GMP commercial [68Ga]-generators such as, but not limited to GalliAd^{®} and GalliaPharm^{®}.

The fully automated EasyOne is currently the most compact, simple and user-friendly synthesizer on the market for routine production of tracers labelled with radiometals such as Gallium-68 and Lutetium-177. User-friendly "slip & start" cassettes (reference 15 in figure 4) and reagent kits with color-coded containers (not shown) allow a fast setup. Cassettes are supplied ready to use in sealed pouches. RFID labels enable the automatic traceability of the consumables and the automatic selection of the corresponding synthesis sequence.

Patent application WO 2017/178156 A1 discloses a system in which a cassette for the intended production is configured to be dropped, slipped and snapped in a holding tray. The cassette is thus tilted up and snapped in place. The colored coded vials have to be put on the matching positions. When the RFID labels are in the slots, the synthesizer is ready to start.

As a consequence EasyOne's smart and compatible design connects easily and seamlessly with all Gallium generators. Its user front-end is self-explanatory. It can be launched within seconds after a few quick clicks. Advantageously comprehensive report can be generated automatically at the end of each synthesis to aid future production.

Quick and easy processes for a wide range of compounds are included - each fully automated to support smooth operation. Benefits are obtained from effortless production from generator elution to the transfer of the radio-labeled tracer into a vial or a syringe. The process is like clockwork, starting with a self-check of the equipment and cassette connections and possibly ending with a rising cycle that drains residual activity to a waste vial, allowing for the quick removal of the cassette. An automated filter integrity test is also performed at the end of each production, minimizing the risk of operator exposure and contamination. That all means EasyOne is primed and ready to go for the next production cycle.

In detail, according to one preferred embodiment, the Gallium-68 ([68Ga]) generator will be connected to the EasyOne synthesizer via a sterile cassette and the whole system will be operated according to the following steps :
1. Prepare the materials (operator):
   a. ensure that the generator 1 is operational (i.e. not outdated) and has sufficient initial activity of [68Ge] to generate [68Ga] (this information is provided by the software) ;
   b. confirm that the synthesizer 5 is set up correctly and ready for use ;
   c. provide consumables kit that includes manifold, tubing, filters, syringes and connectors designed for the EasyOne and the [68Ga] generator 1 ;
   d. typically, provide a diluted hydrochloric acid (HCl) solution for use as an eluent to release [68Ga] from the generator 1.
2. Install the Gallium-68 Generator (operator):
   a. place the Gallium-68 generator 1 in a location compliant with radiological safety protocols ;
   b. provide the specialized tubing from the consumables kit to connect the generator 1, the cold kit vial 2, the external syringe driver 3 and the EasyOne synthesizer 5, using three connections : a tube to connect the external syringe driver to the elution port 21 of the Gallium-68 generator, a tube to connect the outlet 22 of the generator to the cold kit vial 2 and a tube to connect the cold kit vial 2 to the EasyOne synthesizer 5, wherein the eluted [68Ga] will flow into the cold kit vial 2.
3. Connect the EasyOne synthesizer 5 to the cold kit vial 2 via an input connection.
4. Connect the generator outlet 22 to the cold kit vial 2.
5. Connect the external syringe driver 3 to the inlet of the [68Ga]-generator 1.
6. Quasi-fully automatically configure the EasyOne synthesizer 5, comprising, after the operator has selected, on the EasyOne user interface 8, a program corresponding to the desired cold kit (e.g. but not exhaustively Somakit^{®}, Locametz^{®}, Illuccix^{®}, TOCScan^{®}, IsoProTrace^{®}, etc.):
   a. ensure that the settings are correct for the type of [68Ga] generator 1 and the cold kit ;
   b. select the HCl source used for generator elution ;
   c. select if the patient dose dispensing will be performed manually or with the EasyOne synthesizer 5;
   d. implement the process via the interface, so that the EasyOne synthesizer will be able to automate the elution, synthesis, and syringe dispensing.
7. Elution and radiolabeling (automatic):
   a. inject automatically the elution solution into the Gallium-68 generator 1 ;
   b. release of [68Ga] from the generator 1 with direct transfer to the cold kit vial 2 ;
   c. combine the eluted [68Ga] with the precursor included in the cold kit vial and implement the radiolabeling process ;
   d. only when heating by the cold kit is required, increase and control the temperature in the heating block of the EasyOne synthesizer 5, preferably to a temperature of 95°C (note that time and temperature vary in function of the particular cold kit used) ;
   e. control timing by the system to ensure optimal radiolabeling.
8. At the end of the radiolabeling, automatic preparation of a sample for QC testing to ensure the quality of the final product (QC testing is manual).
9. Final product dispensing (automatic):
   a. enter the requested dose for patient (manual) ;
   b. fill in syringes (automatic) with the final radiopharmaceutical, ready for administration.
10. Clean-up and maintenance (partially automatic):
   a. after each use, follow a cleaning protocol to remove any residual radioactivity or contaminants from the consumables ;
   b. perform routine maintenance checks on the generator 1 and the EasyOne system to ensure they are functioning properly ;
   c. manually replace consumables as needed (e.g., filters, tubes).

The automated assistance for dose preparation lies in an automated solution for generator elution, cold kit labeling and syringe dispensing. The cold kit vial can be considered as a part of the EasyOne reactor, so that the whole process is automated. The time to prepare a syringe is in the range 30-45s (4 times faster than manual dispensing) and the operator radiation exposure is reduced up to 75% when compared to manual dose dispensing.

Typical performance values are given in Table 1.

**Table 1**

| **Performance values** | | |
|---|---|---|
| **Cassette set up time** | < 1 min | |
| **Generator elution time** | IRE | 3.5 - 5 min |
| | E&Z | |
| **Radiolabeling time*** | SomaKit | 5 - 10 min |
| | NetSpot | |
| | Locametz | |
| | Illucix | |
| | IsoProTrace | |
| **Average dose dispensing time**** | 30 - 45 sec | |
| **Operator radiation exposure reduction***** | ↘ 75 % | |
| **Average dose dispensing accuracy****** | ± 10% | |

| | | |
|---|---|---|
| * The synthesis time follows the instructions provided in the SmPC, with each cold kit requiring specific radiolabeling times and temperatures. Only some of the cold kits presently available on the market are mentioned. ** The time needed for patient dose preparation varies depending on the volume transferred into the syringe. *** During patient dose dispensing. Based on 45 measurements (see FIG. 6), the reduction of exposure is evidenced in the dose preparation using the system of the invention vs. manual one. **** If below 10%, the dose can be adjusted by reconnecting the syringe to the dispensing line. If above 10%, the software calculates the waiting time required to be within the specification. | | |

In terms of market demand, there is a growing need for more efficient, cost-effective and safer processes in the fields of medical technology, pharmaceutical technology, and nuclear medicine. This invention could meet this demand, thereby having a significant market potential. Furthermore, as the global population continues to grow and age, the demand for diagnostic and therapeutic procedures is also likely to increase. Moreover the use of cold kit based radiopharmaceuticals seems to become the standard of radiolabeling in the coming years. This could further drive the demand for this invention.

In conclusion, the invention of an automated system for radiolabeling of cold kits and dispensing of patient doses has significant application prospects and market demand. It could lead to more efficient, cost-effective, and safer processes in the fields of medical technology, pharmaceutical technology, and nuclear medicine.

### Reference symbols

- 1: [68Ga] generator
- 2: cold kit vial
- 3: external syringe driver (robotic arm)
- 4: heating block
- 5: syringe dispensing assistance apparatus ("synthesizer")
- 6: (shielded) dispensing syringe
- 7: control micro-computer
- 8: user interface
- 9: HCl eluent pouch
- 10: tubing
- 11: syringe
- 12: holding tray for slip-and-snap cassette
- 13: accessories
- 15: single-use, sterilized and ready-to-use cassette
- 16: shielding holder (for dispensing syringe)
- 18: 5mL sample loop
- 19: elution set
- 21: inlet of generator
- 22: outlet of generator

## Claims

1. A fully automated system for radiolabeling a cold kit and dispensing a dose to a patient comprising :
- an elution set capable to connect a generator (1) or an activity vial to a synthesizer (5), and possibly to an external syringe driver (3) ;
- a radioisotope generator (1) or a vial containing starting activity for the production of a radioisotope, so that the elution of the radioisotope out of the generator is performed by using an elution solution, which is internal or external depending on the generator, and automated means for managing the radioisotope generator operation ;
- a cold kit vial (2) containing reagents needed to perform radiolabelling with said radioisotope, and fluidly connected to the radioisotope generator (1) so that through automated elution the eluted radioisotope is capable to be mixed with the cold kit in said vial (2) to provide a radiolabelled product ;
- a synthesizer (5) with a syringe dispensing assistance provided with means to successively, at least partially and automatically produce an aspiration of the radiolabeled product from said cold kit vial (2) into the synthesizer (5), the addition of a buffer to the radiolabeled product, heating the radiolabeled product, to provide an accurate patient dose and a final dispensing of the patient dose ;
- a heating block (4) equipped with a radioactivity probe for heating the radiolabeled product, and measuring the final activity thereof.

2. The fully automated system according to claim 1, wherein the automated means for managing the radioisotope generator operation comprise means for cleaning, elution, and measurement of initial activity and decay of the radioisotope.

3. The fully automated system according to claim 1, wherein the synthesizer (5) further comprises automated means for preparing a sample of the radiolabeled product for QC testing and QC testing means for ensuring the quality and safety of the final product to be injected to the patient.

4. The fully automated system according to claim 1, wherein it comprises several elution sets (19), or withdrawal lines in case of activity withdrawn from vials, respectively corresponding to different radioisotopes so that the fully automated system is compatible with the labeling with several radioisotopes, such as [⁶⁸Ga] and [^{99m}Tc].

5. The fully automated system according to claim 1, wherein it comprises a user interface (8) coupled to a computer (7) allowing for operation and monitoring of the system and means for accommodating RFID labels enabling the automatic traceability of consumables and an automatic selection of the corresponding synthesis sequence.

6. The fully automated system according to claim 1, wherein the synthesizer (5) comprises means for accommodating so-called "slip-and-start" cassette (15) which is single-use and sterilized, for an intended production, said cassette (15) being supplied ready-to-use in a sealed pouch.

7. The fully automated system according to claim 6, wherein said cassette (15) for the intended production is configured to be dropped and slipped in a holding tray (13) of the synthesizer (5), further tilted up and snapped in place.

8. The fully automated system according to claim 1, wherein it includes safety features in the form of radiation shielding and automatic shutdown means in case of error detection, ensuring safety of the user and the patient.

9. The fully automated system according to claim 1, wherein the heating block (4) is incorporated in the synthesizer (5).

10. A streamlined automated process for radiolabeling of a cold kit with a radioisotope and preparing the dispensing of a dose to a patient, using the automated system according to anyone of claims 1 to 9, comprising the following automated steps:
- configuring the synthesizer (5), comprising, after the operator has selected, on the user interface (8), a program corresponding to the desired radiopharmaceutical synthesis :
a) ensuring that the settings are correct for the type of radioisotope generator and cold kit, and sending an error message if this is not the case ;
b) selecting, if needed, a HCl source used for generator elution ;
c) selecting that the patient dose dispensing will be performed manually or with the synthesizer (5);
d) implementing the process, so that the synthesizer (5) will be able to automate the elution, synthesis, and syringe dispensing;
- carrying out elution and synthesis/mixing process, comprising :
a) injecting automatically the elution solution into the radioisotope generator (1) ;
b) releasing the radioisotope from the generator (1) with direct transfer to the cold kit vial (2) ;
c) optionally, according to the cold kit and generator used, adding a buffer before or after elution ;
d) combining the eluted radioisotope with the precursor included in the cold kit vial and starting up the radiolabeling process ;
e) for cold kit requiring heating, increasing and controlling the temperature in the heating block (4) of the synthesizer (5), preferably to a temperature of 95°C ;
f) controlling timing by the system to ensure optimal radiolabeling ;
- at the end of the radiolabeling, preparing of a sample for QC testing to ensure the quality of the final product ;
- preparing final product ready for dispensing a dose to a patient, including, after the requested dose for patient has been entered through the interface (8), filling in a syringe (6) with the final radiopharmaceutical, ready for administration ;
- cleaning-up and maintaining the system in a partially automated manner, including :
a) after each use, following a cleaning protocol to remove any residual radioactivity or contaminants from the synthesizer (5) ;
b) performing routine maintenance checks on the generator (1) and the synthesizer device (5) to ensure they are functioning properly ;
c) replacing consumables such as filters, tubes, etc. as needed.

11. The streamlined automated process for radiolabeling of a cold kit with a radioisotope and preparing the dispensing of a dose to a patient, according to claim 10, comprising the following steps, performed at least partially manually, as a preamble:
- preparing the materials, including :
a) ensuring that the generator (1) is operational and has sufficient initial activity ;
b) confirming that the synthesizer (5) is set up correctly and ready for use ;
c) providing consumables kit that includes tubing, syringes, filters, and connectors designed for the synthesizer (5) and the radioisotope generator (1) ;
d) providing an eluent, preferably a diluted hydrochloric acid solution, to release the radioisotope from the generator ;
- installing the radioisotope generator (1), including
a) placing the radioisotope generator (1) in a location compliant with radiological safety protocols ;
b) providing dedicated tubing from the consumables kit to connect the generator (1), the cold kit vial (2), the external syringe driver (3) and the synthesizer (5), using three connections, namely a tube to connect the external syringe driver (3) to the elution port (21) of the generator (1), a tube to connect the outlet (22) of the generator to the cold kit vial (2) and a tube to connect the cold kit vial (2) to the synthesizer (5), wherein the eluted radioisotope will flow into the cold kit vial (2) ;
- connecting the synthesizer (5) to the cold kit vial (2) intended to contain the radiolabeled product, connecting the generator outlet (22) to the cold kit vial (2) and connecting the external syringe driver (3) to the inlet (21) of the generator (1).
